# EUROPEAN PATENT SPECIFICATION

(11) **EP 1 684 215 B1**
(45) Date of publication and mention of the grant of the patent: **01.12.2010**
(21) Application number: 05027192.3
(22) Date of filing: 13.12.2005
(51) Int. Cl.: G06K 19/077, H04B 10/00, G07F 7/10

(54) **Utilizing a laser to securely communicate with radio frequency identification tags**
Verwendung eines Lasers zur sicheren Kommunikation mit RFID-Etiketten
Utilisation d'un laser pour communiquer de manière sécurisée avec des étiquettes d'identification par radiofréquence

(30) Priority: 14.12.2004 US 11982
(43) Date of publication of application: 26.07.2006
(73) Proprietor: PITNEY BOWES INC., Stamford, CT 06926-0700 (US)
(72) Inventor: Obrea, Andrei, Seymour Connecticut 06483 (US); Foth, Thomas J., Trumbull Connecticut 06811 (US)
(74) Representative: HOFFMANN EITLE

(56) References cited:
- WO-A-00/16253
- WO-A-03/071477
- WO-A-2004/081849
- DE-A1- 10 240 396
- GB-A- 2 395 613
- US-A- 5 134 277
- US-A- 5 825 045
- US-A- 5 874 724
- US-A1- 2004 012 496

## Description

This invention relates to electronic systems and, more particularly, to securely communicating with a radio frequency identification device that does not use batteries.

Radio frequency identification device (RFID) tags have been programmed to contain digital information either during the manufacturing of the read-only memory portion of the RFID integrated circuit, or in the field using electromagnetic radio frequency signals to store information in the nonvolatile memory portion of the RFID tag.

A RFID tag does not require contact or line-of-sight to operate. RFID tags can function under a variety of environmental conditions and provide a high level of data integrity. RFID tags utilize radio frequency signals to transfer information from the RFID tag to a RFID reader and from the RFID reader to the RFID tag. Thus, radio waves are used to transfer information between the RFID tag and the RFID reader from the RFID reader to the RFID tag. A disadvantage of the foregoing is that the information transmitted by the RFID tag may be intercepted easily and read by an unintended party.

US-A-5,134,277 describes an RFID tag that can be programmed by optical pulses. The tag sends its reply signal as radio waves. A laser light source and solar cells for powering the tag are also mentioned, but there is no RF information path from the reader to the tag.

WO 00/16253 A describes an RFID system consisting of a chip-card and reader. The system has an optical and a magnetic path, both for transmitting power and data. The chip-card receives a light signal from the reader and reacts by sending an RF reply signal which may contain information about the strength of the received light signal and/or any user data stored in the chip-card.

More specifically, WO 00/16253 A discloses: the step of generating a light beam from the reader for driving a photodiode circuit and a logic unit CPU, said photodiode circuit and logic unit CPU located within the chip-card; the step of transmitting data, by means of said optical path, to the chip-card; and the step of receiving a radio frequency signal at the reader from the chip-card in response to information carried by said light beam. The data communication from the chip-card to the reader is provided by a magnetic path. For this purpose, the reader has a first inductor coil and a source of AC current. A secondary coil resides in the card and is magnetically coupled, by mutual inductance, to the primary coil of the reader. The power for data transmission from the chip-card to the reader is therefore provided by the reader.

GB 2 395 613 A discloses a memory tag that has a non-volatile memory in which in use data is stored, an antenna coil and power supply circuit such that in use the memory tag is powered by inductive coupling. The memory tag also has a sensor for receipt of transmitted light carrying input signals and a processor for processing of the received input signals. A read/write device, for communication with the memory tag has a signal generator, an antenna coil and a power supply circuit for powering the memory tag in use by inductive coupling. The read/write device further includes a light emitter for emission of the light carrying the input signals to the memory tag. The memory tag is a Radio Frequency Identification (RFID) device powered by inductive coupling but communicating optically.

In particular, GB 2 395 613 A discloses: carrying information, by means of a light beam, from a reader to an RFID device; deciphering received optical signals in the RFID; communicating from the RFID to the reader via an optical path.

WO 03/071477 A1 discloses a record carrier with a first area for storing information and a second area having an integrated circuit. This integrated circuit has transmitting means for transmitting additional information and means for receiving a signal for power supply of the integrated circuit. The receiving means has a photodiode. The integrated circuit further has frequency control means for controlling the frequency transmitted by the transmitting means. The disclosure also relates to a device for reading a record carrier and an integrated circuit.

More particularly, WO 03/071477 A1 discloses: generating a light beam from a reader to an integrated circuit for driving the integrated circuit; carrying information, by means of the light beam, to the integrated circuit; securing information, to be carried by means of the light beam from the reader to the integrated circuit, using encryption and decryption.

US-A-5,874,724 describes RFID tags that respond (by radio signals) to a predefined command from the reader only if the photodetector in the tag was activated by a light signal with appropriate wavelength and flash pattern. A laser may serve as radiation source, but there is no suggestion of providing power to the transponder via a light beam.

WO 03/071477 describes a system having an RFID tag and a reader. The reader transmits data and energy by a light beam to the tag which causes the tag to reply with an RF signal. Digital cryptographic methods are suggested. However, there is no suggestion of transmitting RF information from the reader to the tag.

Reference is also directed to WO 2004/081849 and GB-A-2 395 613.

One method utilized by the prior art to protect transmitted information between a RFID tag and a RFID reader was to encrypt the transmitted information.

The packaging for RFID tags must be inexpensive, small and light. The least expensive RFID tags do not use batteries. Such RFID tags have electronic circuits that are powered by converting the energy of RF fields created by the RFID reader and captured by the RFID tag's antenna. As a result, the amount of electronic circuitry available in RFID tags powered only by the energy of RF fields is severely limited. Furthermore, the complexity of algorithms to process data and the amount of data stored in such circuits are also very limited. Currently, RFID tags use simple algorithms to protect the information exchanged with the RFID reader. The best RFID tags can do is to store a small amount of private information (e.g., their identity numbers or any secret information used to protect the communication with the RFID reader). Thus, one of the disadvantages of the prior art is that RDIF tag circuits do not protect private information against sophisticated attackers. Such attackers can obtain secret information stored in RFID tags using inexpensive equipment.

Another disadvantage of the foregoing is that the amount of energy obtained by the RFID tags only from RF fields created by RFID readers is not sufficient to compute and analyze messages protected by strong cryptographic algorithms.

RFID tags using batteries are more expensive, bigger and have a limited life. In addition to that, they may be less reliable as the battery may exhaust its energy during operation.

### SUMMARY OF THE INVENTION

The invention is defined by the independent claims.

Preferred embodiments are set out in the dependent claims.

For a better understanding of the invention and to show how the same may be carried into effect, reference will now be made, with reference to the drawings, in which:
Fig. 1 is a block diagram showing communications between an RFID tag and an RFID reader;
Fig. 2 is a drawing showing the elements of Fig. 1 in greater detail; and
Fig. 3 is a flow chart of the operation of digital signal processor 80 of Fig. 2.

### DESCRIPTION OF EMBODIMENTS

The following describes a system which provides a secure communications channel for the transmission of a large amount of information between an RFID tag and an RFID reader. A laser beam is utilized to carry information and power from the RFID reader to the RFID tag. Thus, the laser beam has a dual use as an information carrier and a source of power for the RFID tag. Thus, only individuals and/or equipment that can both see the laser transmission and hear the RFID transmission can eavesdrop on the RFID tag RFID reader transmissions. This system allows the use of complex algorithms to protect data being communicated, because they can use the increased level of power available to the RFID tag. Additionally, using more sophisticated packaging can enhance the physical protection of stored data.

This is accomplished by generating a light beam that carries power and information to a radio frequency identification device, and receiving a radio frequency signal from the radio frequency identification device in response to the information carried by the light beam.

An advantage of this system is that the RFID tag does not require a battery since it receives power from a light beam, preferably from a laser beam.

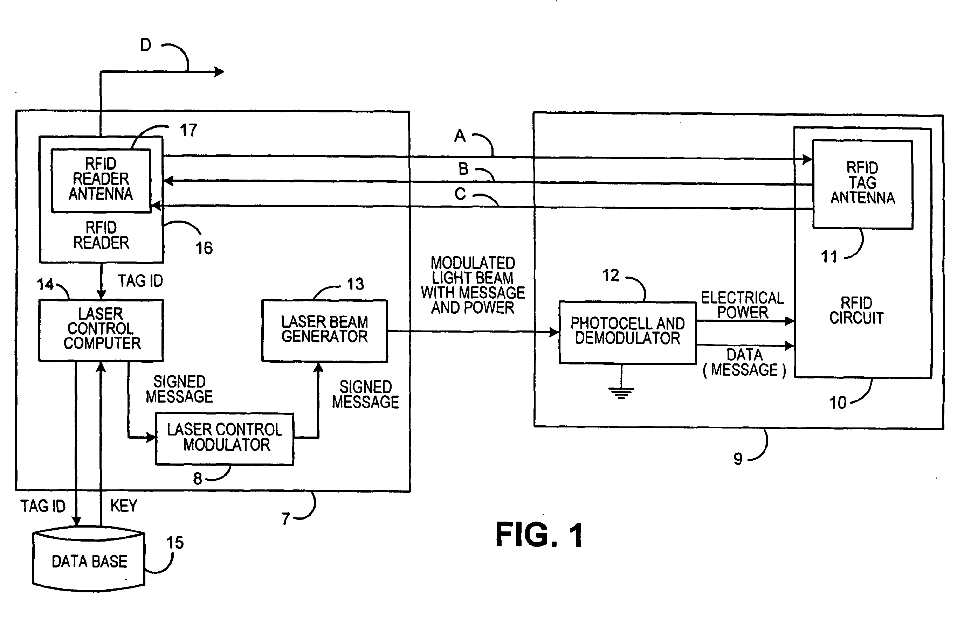

Referring now to the drawings in detail, and more particularly to Fig. 1, the reference character 9 represents a RFID tag. Tag 9 includes RFID circuit 10, which has a RFID tag antenna 11 attached thereto. RFID circuit 10 is coupled to photocell and demodulator 12. Demodulator and photocell 12 receive a light beam from laser beam generator 13. Generator 13 is coupled to modulator 8 and modulator 8 is coupled to laser control computer 14. Laser control computer 14 is coupled to data base 15 and computer 14 is also coupled to RFID reader 16, which has a RFID reader antenna 17 attached thereto. Computer 14, modulator 8 and generator 13 may be part of a bar code reader connected to the RFID reader 16. Computer 14, modulator 8, generator 13, reader 16 and antenna 17 comprise base station 7. Communications between RFID circuit 10 and RFID reader 16 would be performed as follows.

RFID reader 16 will cause RFID antenna 17 to transmit a radio frequency (RF) request signal via channel A that would be received by RFID tag antenna 11. The aforementioned RF signal will request RFID circuit 10 to transmit its tag identification to RFID reader 16. After antenna 11 receives the RF request signal, RFID circuit 10 will process the signal and transmit via antenna 11 and channel B a RF signal containing the tag identification of RFID circuit 10. Antenna 17 will receive the signal containing the tag identification of RFID circuit 10. RFID reader 16 will process and/or authenticate the signal containing the tag identification and transmit the tag identification of RFID circuit 10 to laser control computer 14. Computer 14 will transmit the tag identification of RFID circuit 10 to database 15. Database 15 will read its database to determine the cryptographic key for the tag identification of RFID circuit 10. Database 15 will transmit the determined cryptographic key to computer 14. Computer 14 will incorporate the cryptographic key into a message that becomes a signed message requesting tag 10 to transmit the protected information contained in circuit 10 to reader 16. Computer 14 will transmit the signed message to modulator 8. Modulator 8 will transmit the signed message to laser beam generator 13. Generator 13 will process the signed message and produce a modulated laser light beam output that has the signed message and the power of the light beam. Photocell and demodulator 12 will receive the signed message and power. When photocell and demodulator 12 is illuminated by the laser power, the photocell will convert the laser power into electricity and the demodulator will demodulate the signed message. The electrical power will be transmitted to circuit 10 via a power channel and the signed message will be transmitted to circuit 10 via a data channel. Circuit 10 will transmit protected payload information stored in tag 10 via antenna 11, channel C, and antenna 17 to RFID reader 16. Protected payload information may be anything written into RFID tag 10, i.e., the contents of a container; the identity of the owner of the container; instructions for transporting the goods contained in the container; the name of the owner of the goods in the container; the value of the goods contained in the container; information regarding previous processing steps for the goods contained in the container; biometric information contained in a passport; biometric information contained in a identification card; information contained in a smart card; a persons medical records; answers to questions contained in a mail piece; financial information contained in a mail piece, etc. The aforementioned payload information is transmitted from RFID reader 16 via channel D to other devices (not shown), i.e., a computer that uses the protected payload information the intended application.

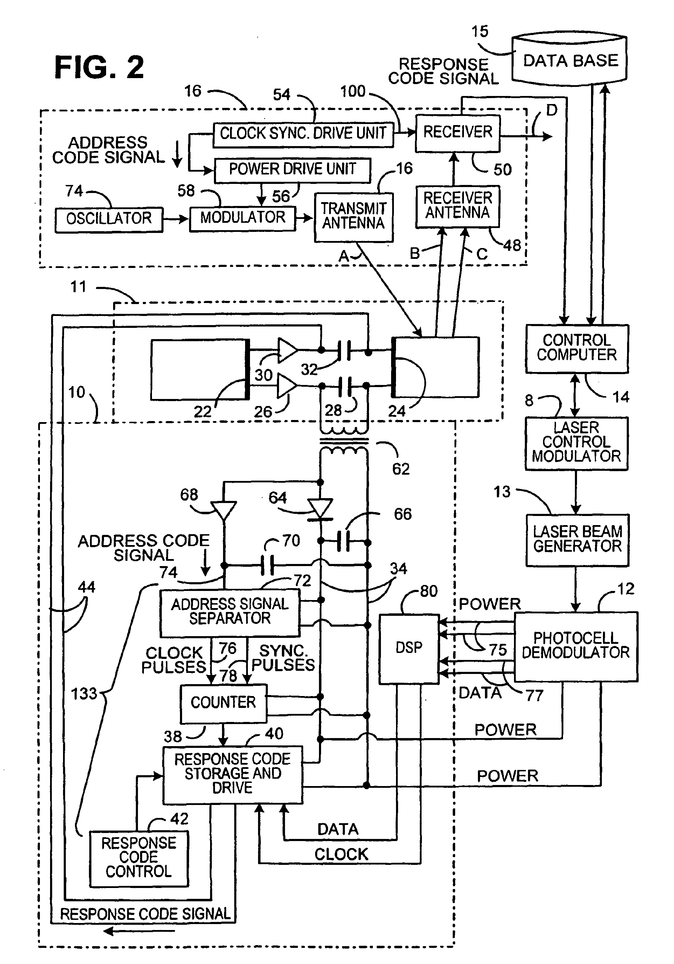

Fig. 2 is a drawing showing the elements of Fig. 1 in greater detail. Antenna 11 includes feed terminals 22 and 24, diodes 26, and 30 and capacitors 28 and 32. The low voltage or primary terminals of transformer 62 are connected across bypass capacitor 28. Transformer 62 is tuned to resonate at the frequency of the power signal and is also matched to the load and operates to produce a higher voltage signal of this frequency at its output terminals. In other words, the carrier or radio frequency signals are bypassed by capacitor 28 whereas the envelope of the pulses, which occur at the modulation frequency, are applied to the tuned transformer. Effectively, therefore, the sidebands of the illuminating signal are used to obtain the power signal to energize information circuit 133 during the initial identity inquiry, i.e., to supply the power to a subset of the circuitry of circuit 10 sufficient to receive the request transmitted via channel A and to retrieve the tag ID from RFID circuit 10 and transmitted back via channel B to RFID reader 16.

A series chain comprising a power signal detector 64 and a filter capacitor 66 is connected across the secondary terminals of transformer 62. The capacitance of this filter capacitor 66 must be sufficiently high as to store voltage throughout the clock and sync pulses included in the address code signal and to power the digital information circuit 133. A second series chain comprising an address code detector 68 and a bypass capacitor 70 is connected across the output terminals of the transformer 62. The capacitance of this bypass capacitor 70 must be sufficiently low as to transmit without significant distortion the clock and sync pulses included in the address code signal and must be sufficiently high as to store voltage throughout the period of the power signal.

The digital information circuit 133 comprises a series chain comprising an address signal separator 72, counter 38, and response code storage and drive 40 and response code control 42. Leads 34 are connected between filter capacitor 66 and the power input terminals of signal separator 72, counter 38, and response code storage and drive 40. A lead 74 is connected from the junction of the address code detector 68 and the bypass capacitor 70 to the address signal separator 72. Lead 74 applies the address code signal comprising clock and sync pulses to the address signal separator 72. The address signal separator 72 is a pulse width discriminator that operates to separate the clock and sync pulses from the transmitted signal train. These separated signals are individually applied as pulses to the counter 38. A response code control 42 may be connected to the response code storage and drive 40 to alter the number, duration, spacing, and modulation frequency of the pulses comprising the response code signal. The response code control 42 may be operated by manual switches or by a sensor. The response code signal produced by information circuit 133 is applied across the bypass capacitor 32 via leads 44. Thus, information circuit 133 provides the identity of tag 9.

Power is transmitted from photocell and demodulator 12 to digital signal processor (DSP) 80 via lines 75 and data is transmitted from photocell and demodulator 12 to DSP 80 via lines 77. Photocell and demodulator 12 is also coupled to leads 34 to supply power to response code storage and drive 40. DSP 80 used the data carried by the light beam from generator 13 to authenticate the request for information, retrieve the information requested and send the information to response code storage and drive 40. DSP 80 also transmits data and clock pulses to response code storage and drive 40 and antenna 11. At this time antenna 11, which is powered from photocell and demodulator 12 will communicate with RFID reader 16 using channel C.

The request to transmit the tag ID from RFID circuit 10 is initiated by RFID reader 16, which includes series chain comprising a clock-sync drive unit 54, a power drive unit 56, and a modulator 58 that is connected between the oscillator 74 and antenna 48. Antenna 48 transmits a RF Request Signal via channel A that is received by feed 24 of antenna 11. The aforementioned signal request RFID circuit 10 to transmit its tag identification to RFID reader 16. Receiver 50 and receiver antenna 17 are components of reader 16. Clock-synchronization drive unit 54 produces an address code signal comprising a synchronizing pulse followed by clock pulses. A lead 100 connects drive unit 54 to receiver 50. This address code signal is employed to control the information received from digital information circuit 133 included in RFID circuit 10. Power drive unit 56 produces a power signal that is higher in frequency than the frequency of the address code signal. The clock-sync drive unit 54 operates to turn off the power drive unit 56 during the time of occurrence of the clock and synchronizing pulses. Accordingly, an address coded power signal is applied to modulator 58, which operates to modulate the frequency produced by oscillator 74 with this address coded power signal. Receiver 50 is coupled to RFID reader antenna 17 and drive unit 54, receiver 50 produces a response code information signal or protected payload signal that is transmitted via channel D.

The information containing the identity of RFID tag 10 is transmitted via channel B and is used by laser control unit 14 to retrieve the private information, i.e., cryptographic keys from database 15 to be subsequently used for the creation of the message to be transmitted via channel C. After the message to be transmitted on channel C was created in laser control computer 14, it is used to modulate the laser beam produced by generator 13 under the control of modulator 8.

After RFID reader 16 processes the signal containing the tag identification, receiver 50 of reader 16 will transmit the tag identification of RFID circuit 10 to laser control computer 14. Computer 14 will transmit the tag identification of RFID circuit 10 to database 15. Database 15 will read its database to determine the cryptographic key for the tag identification of RFID circuit 10. Database 15 will transmit the determined cryptographic key to computer 14. Computer 14 will incorporate the cryptographic key into a message that becomes a signed message requesting tag 10 to transmit the protected information contained in circuit 10 to reader 16. Computer 14 will transmit the signed message to laser control modulator 8. Modulator 8 will transmit the signed message to laser beam generator 13. Generator 13 will process the signed message and produce a modulated laser light beam output that has the signed message and the power of the light beam. Photocell and demodulator 12 will receive the signed message and power. When photocell and demodulator 12 is illuminated by the laser power, the photocell will convert the laser power into electricity and the demodulator will demodulate the continuous signed message. It would be obvious to one skilled in the art that other (less secure) methods of authenticating a message could be used instead of digital signatures (e.g., agreed upon algorithms, numeric transformations, etc.) The electrical power will be transmitted to DSP 80 via lines 75 and the signed message will be transmitted to DSP 80 via lines 77. Circuit 10 will transmit payload information stored in information circuit 133 via feed 24 of antenna 11, channel C, and antenna 17 to RFID reader 16.

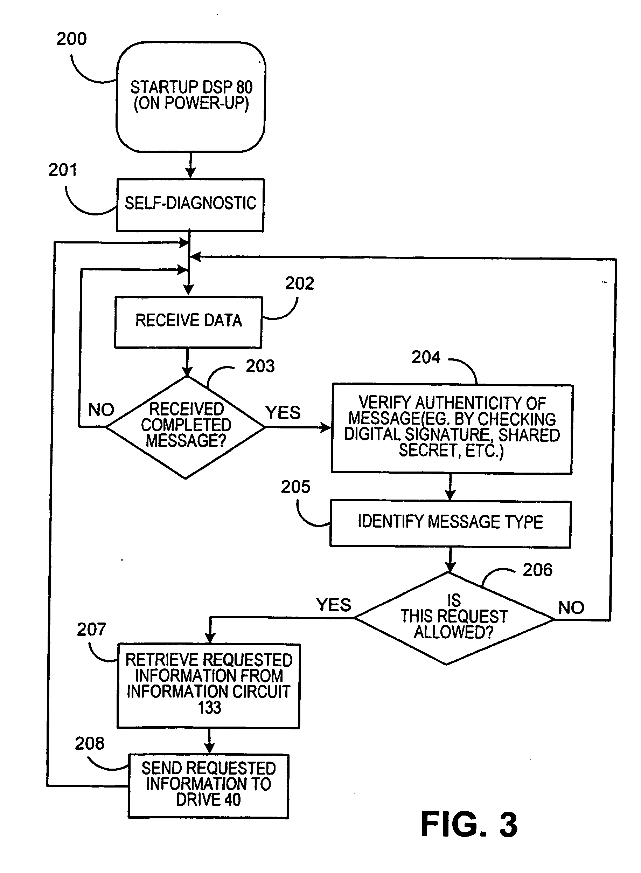

Fig. 3 is a flow chart of the operation of digital signal processor 80 of Fig. 2. The program begins in block 200, when power is supplied to DSP 80 (Fig. 2). Then the program goes to block 201 where DSP 80 performs self-diagnostic tests. Now the program goes to block 202 where DSP 80 receives data from photocell demodulator 12. Now the program goes to decision block 203. Decision block 202 determines whether or not the data DSP 80 received from photocell demodulator 12 formed a complete message. If block 203 determines that DSP 80 did not receive a complete message the program goes back to the input of block 203. If block 203 determines that DSP 80 received a complete message the program goes to block 204. Block 204 verifies the authenticity of the message, by verifying the digital signature of the message. Then the program goes to block 205 to identify message type. At this point the program goes to decision block 206. Decision block 206 determines whether or not the request in the message is allowed. If block 206 determines that the request is not allowed the program goes back to the input of block 202. If block 206 determines that the request is allowed the program goes to the input of block 207. Block 207 retrieves the requested information from the internal storage of the DSP 80. Now the program goes to block 208 and sends the information to drive 40. Then the program goes back to the input of block 202 to wait for incoming data.

## Claims

1. A method for securely communicating between a radio frequency identification device (9) and a reader (7), which comprises the steps of
a) generating a first radio frequency signal from the reader (7) for carrying information that requests the identification of the radio frequency identification device (9);
b) generating a light beam from the reader (7) that carries power for driving a radio frequency identification device circuit (10), said circuit located within the radio frequency identification device (9);
c) carrying information, by means of said light beam, to the radio frequency identification device (9) identified by the reader (7);
d) securing information, to be carried by means of said light beam from the reader to the tag, using digital cryptographic methods; and
e) receiving a second radio frequency signal (C) at the reader (7) from the radio frequency identification device (9) in response to the information carried by said light beam.

2. The method according to Claim 1, **characterized in that** in step b), a laser beam transmits the information.

3. The method according to any of Claims 1 to 2, **characterized in** further including the step of requesting the identity of the radio frequency identification device (9) by transmitting radio frequency signals (A) from the reader (7) to the radio frequency identification device (9).

4. The method according to any preceding claim, **characterized in** further including the step of:
transmitting by the radio frequency identification device (9) to the reader (7) the information identifying the radio frequency identification device.

5. The method according to Claim 4, **characterized in** further including the step of:
receiving by the reader (7) the information identifying the radio frequency identification device (9).

6. The method according to Claim 5, charactized in further including the step of:
retrieving from a database (15) information which is specific to the device identified by the identifying information received from the radio frequency identification device (9).

7. The method according to any preceding claim, **characterized in** further including the step of:
transmitting protected payload information stored in the radio frequency identification device (9) to the reader (7).

8. The method according to Claim 7, **characterized in that** the payload information is information written into the radio frequency identification device (9).

9. The method according to Claim 7, **characterized in that** the payload information is information computed by the radio frequency identification device.

10. A reading system for securely communicating between a radio frequency identification device (9) and a reader (16), said reading system (7) comprising
a) means (16) for generating a first radio frequency signal for carrying information that requests the identification of the radio frequency identification device (9);
b) means (13) for generating a light beam that carries power for driving a radio frequency identification device circuit (10), said circuit located within the radio frequency identification device (9);
c) means (8) for transmitting information, by means of said light beam, to the identified radio frequency identification device (9);
d) means for encrypting information to be carried by said light beam; and
e) means (17) for receiving a second radio frequency signal (C) from the radio frequency identification device (9) in response to the information carried by the light beam.

11. The system according to Claim 10, **characterized in** further comprising means for requesting the identity of the radio frequency identification device, said requesting means being operable to transmit radio frequency signals from the reader to the radio frequency identification device.

12. The system according to Claim 10 or 11, **characterized in that** the means for generating a light beam comprises:
a laser beam generator (13) arranged to transmit modulated information via a laser beam.

13. The system according to any of Claims 10 to 12, **characterized in** further comprising means for signing information to be carried by the laser beam.

14. The system according to Claim 13, **characterized in** further comprising:
a digital signal processor (80) that is coupled to said photocell and demodulator (12), said processor being arranged to authenticate a request received from a base station.

15. The system according to Claim 14, **characterized in that** the said digital signal processor (80) is adapted to retrieve requested information.

16. The system according to Claim 14, **characterized in that** the said digital signal processor (80) is adapted to retrieve calculated information.

## Patentansprüche

1. Verfahren zum sicheren Kommunizieren zwischen einer Funkfrequenz-Identifiziervorrichtung (9) und einem Leser (7), welches die Schritte umfasst
a) Erzeugen eines ersten Funkfrequenzsignals von dem Leser (7) zum Tragen von Information, welche die Identifizierung der Funkfrequenz-Identifiziervorrichtung (9) anfordert;
b) Erzeugen eines Lichtstrahls von dem Leser (7), welcher Leistung zum Treiben einer Schaltung (10) der Funkfrequenz-Identifiziervorrichtung trägt, wobei sich die Schaltung innerhalb der Funkfrequenz-Identifiziervorrichtung (9) befindet;
c) Tragen von Information mittels des Lichtstrahls, an die Funkfrequenz-Identifiziervorrichtung (9), welche von dem Leser (7) identifiziert wird;
d) Sichern von Information, welche mittels des Lichtstrahls von dem Leser zu dem Tag übertragen werden soll, unter Nutzung von digitalen Kryptographie-Verfahren; und
e) Empfangen eines zweiten Funkfrequenzsignals (C) an den Leser (7) von der Funkfrequenz-Identifiziervorrichtung (9) ansprechend auf die Information, welche durch den Lichtstrahl übertragen wird.

2. Verfahren nach Anspruch 1, **dadurch gekennzeichnet, dass** in Schritt b) ein Laserstrahl die Information überträgt.

3. Verfahren nach einem der Ansprüche 1 bis 2, **dadurch gekennzeichnet, dass** es ferner den Schritt des Anforderns der Identität der Funkfrequenz-Identifiziervorrichtung (9) durch Übertragen von Funkfrequenzsignalen (A) von dem Leser (7) zu der Funkfrequenz-Identifiziervorrichtung (9) beinhaltet.

4. Verfahren nach einem vorangehenden Anspruch, **dadurch gekennzeichnet, dass** es ferner den Schritt umfasst:
Übertragen, von der Funkfrequenz-Identifiziervorrichtung (9), an den Leser (7) der Information, welche die Funkfrequenz-Identifiziervorrichtung identifiziert.

5. Verfahren nach Anspruch 4, **dadurch gekennzeichnet, dass** es ferner den Schritt umfasst:
Empfangen durch den Leser (7) der Information, welche die Funkfrequenz-Identifiziervorrichtung (9) identifiziert.

6. Verfahren nach Anspruch 5, **dadurch gekennzeichnet, dass** es ferner den Schritt umfasst:
Abrufen aus einer Datenbank (15) von Information, welche für die Vorrichtung spezifisch ist, welche durch die Identifizierinformation identifiziert wird, welche aus der Funkfrequenz-Identifiziervorrichtung (9) empfangen wird.

7. Verfahren nach einem der vorangehenden Ansprüche, **dadurch gekennzeichnet, dass** es ferner den Schritt umfasst:
Übertragen von geschützter Payload-Information, welche in der Funkfrequenz-Identifiziervorrichtung (9) gespeichert ist, an den Leser (7).

8. Verfahren nach Anspruch 7, **dadurch gekennzeichnet, dass** die Payload-Information Information ist, welche in die Funkfrequenz-Identifiziervorrichtung (9) geschrieben wird.

9. Verfahren nach Anspruch 7, **dadurch gekennzeichnet, dass** die Payload-Information Information ist, welche von der Funkfrequenz-Identifiziervorrichtung berechnet wird.

10. Lesesystem zum sicheren Kommunizieren zwischen einer Funkfrequenz-Identifiziervorrichtung (9) und einem Leser (16), wobei das Lesesystem (7) umfasst
a) Mittel (16) zum Erzeugen eines ersten Funkfrequenzsignals zum Tragen von Information, welche die Identifizierung der Funkfrequenz-Identifiziervorrichtung (9) anfordert;
b) Mittel (13) zum Erzeugen eines Lichtstrahls, welcher Leistung zum Treiben einer Funkfrequenz-Identifiziervorrichtungsschaltung (10) trägt, wobei sich die Schaltung innerhalb der Funkfrequenz-Identifiziervorrichtung (9) befindet;
c) Mittel (8) zum Übertragen von Information mittels des Lichtstrahls an die identifizierte Funkfrequenz-Identifiziervorrichtung (9);
d) Mittel zum Verschlüsseln von Information, welche von dem Lichtstrahl getragen werden soll; und
e) Mittel (17) zum Empfang eines zweiten Funkfrequenzsignals (C) aus der Funkfrequenz-Identifiziervorrichtung (9) ansprechend auf die Information, welche von dem Lichtstrahl getragen wird.

11. System nach Anspruch 10, **dadurch gekennzeichnet, dass** es ferner Mittel zum Anfordern der Identität der Funkfrequenz-Identifiziervorrichtung umfasst, wobei die Anfordermittel betreibbar sind, Funkfrequenzsignale von dem Leser an die Funkfrequenz-Identifiziervorrichtung zu übertragen.

12. System nach Anspruch 10 oder 11, **dadurch gekennzeichnet, dass** die Mittel zum Erzeugen eines Lichtstrahls umfassen:
einen Laserstrahlerzeuger (13), welcher eingerichtet ist,
modulierte Information über einen Laserstrahl zu übertragen.

13. System nach einem der Ansprüche 10 bis 12, **dadurch gekennzeichnet, dass** es ferner Mittel zum Signieren von Information umfasst, welche durch den Laserstrahl getragen werden soll.

14. System nach Anspruch 13, **dadurch gekennzeichnet, dass** es ferner umfasst:
einen Digitalsignalprozessor (80), welcher an die Photozelle und Demodulator (12) gekoppelt ist, wobei der Prozessor eingerichtet ist, eine Anforderung zu authentifizieren, welche von einer Basisstation empfangen wird.

15. System nach Anspruch 14, **dadurch gekennzeichnet, dass** der Digitalsignalprozessor (80) angepasst ist, angeforderte Information abzurufen.

16. System nach Anspruch 14, **dadurch gekennzeichnet, dass** der Digitalsignalprozessor (80) angepasst ist, berechnete Information abzurufen.

## Revendications

1. Procédé pour communiquer de façon sûre entre un dispositif d'identification à fréquence radio (9) et un lecteur (7), qui comprend les étapes consistant à :
a) générer un premier signal à fréquence radio à partir du lecteur (7) pour acheminer une information qui demande l'identification du dispositif d'identification à fréquence radio (9) ;
b) générer un faisceau de lumière à partir du lecteur (7), qui achemine une puissance pour attaquer un circuit de dispositif d'identification à fréquence radio (10), ledit circuit étant disposé à l'intérieur du dispositif d'identification à fréquence radio (9) ;
c) acheminer une information, à l'aide dudit faisceau de lumière, vers le dispositif d'identification à fréquence radio (9) identifié par le lecteur (7) ;
d) sécuriser une information devant être acheminée à l'aide dudit faisceau de lumière du lecteur à l'étiquette, en utilisant des procédés cryptographiques numériques ; et
e) recevoir un deuxième signal à fréquence radio (C) sur le lecteur (7) à partir du dispositif d'identification à fréquence radio (9) en réponse à l'information acheminée par ledit faisceau de lumière.

2. Procédé selon la revendication 1, **caractérisé en ce que**, dans l'étape b), un faisceau de laser transmet l'information.

3. Procédé selon l'une quelconque des revendications 1 ou 2, **caractérisé en ce qu'**il comprend de plus l'étape de demande de l'identité du dispositif d'identification à fréquence radio (9) par transmission de signaux à fréquence radio (A) du lecteur (7) au dispositif d'identification à fréquence radio (9).

4. Procédé selon l'une quelconque des revendications précédentes, **caractérisé en ce qu'**il comprend de plus l'étape consistant à :
transmettre au lecteur (7), par le dispositif d'identification à fréquence radio (9), l'information identifiant le dispositif d'identification à fréquence radio.

5. Procédé selon la revendication 4, **caractérisé en ce qu'**il comprend de plus l'étape consistant à :
recevoir, par le lecteur (7), l'information identifiant le dispositif d'identification à fréquence radio (9).

6. Procédé selon la revendication 5, **caractérisé en ce qu'**il comprend de plus l'étape consistant à :
récupérer à partir d'une base de données (15) une information qui est spécifique au dispositif identifié par l'information d'identification reçue à partir du dispositif d'identification à fréquence radio (9).

7. Procédé selon l'une quelconque des revendications précédentes, **caractérisé en ce qu'**il comprend de plus l'étape consistant à :
transmettre une information de charge utile protégée mémorisée dans le dispositif d'identification à fréquence radio (9) au lecteur (7).

8. Procédé selon la revendication 7, **caractérisé en ce que** l'information de charge utile est une information écrite dans le dispositif d'identification à fréquence radio (9).

9. Procédé selon la revendication 7, **caractérisé en ce que** l'information de charge utile est une information calculée par le dispositif d'identification à fréquence radio.

10. Système de lecture pour communiquer de façon sûre entre un dispositif d'identification à fréquence radio (9) et un lecteur (16), ledit système de lecture (7) comprenant :
a) des moyens (16) pour générer un premier signal à fréquence radio pour acheminer une information qui demande l'identification du dispositif d'identification à fréquence radio (9) ;
b) des moyens (13) pour générer un faisceau de lumière qui achemine une puissance pour attaquer un circuit de dispositif d'identification à fréquence radio (10), ledit circuit étant disposé à l'intérieur du dispositif d'identification à fréquence radio (9) ;
c) des moyens (8) pour transmettre une information, à l'aide dudit faisceau de lumière, au dispositif d'identification à fréquence radio identifié (9) ;
d) des moyens pour crypter une information devant être acheminée par ledit faisceau de lumière ; et
e) des moyens (17) pour recevoir un deuxième signal à fréquence radio (C) à partir du dispositif d'identification à fréquence radio (9) en réponse à l'information acheminée par le faisceau de lumière.

11. Système selon la revendication 10, **caractérisé en ce qu'**il comprend de plus des moyens pour demander l'identité du dispositif d'identification à fréquence radio, lesdits moyens de demande pouvant fonctionner de façon à transmettre des signaux à fréquence radio du lecteur au dispositif d'identification à fréquence radio.

12. Système selon la revendication 10 ou 11, **caractérisé en ce que** les moyens pour générer un faisceau de lumière comprennent :
un générateur de faisceau laser (13) configuré de façon à transmettre une information modulée par l'intermédiaire d'un faisceau laser.

13. Système selon l'une quelconque des revendications 10 à 12, **caractérisé en ce qu'**il comprend de plus des moyens pour signer une information devant être acheminée par le faisceau laser.

14. Système selon la revendication 13, **caractérisé en ce qu'**il comprend de plus :
un processeur de signal numérique (80) qui est couplé à ladite cellule photoélectrique et à un démodulateur (12), ledit processeur étant configuré de façon à authentifier une demande reçue à partir d'une station de base.

15. Système selon la revendication 14, **caractérisé en ce que** ledit processeur de signal numérique (80) est adapté pour récupérer une information demandée.

16. Système selon la revendication 14, **caractérisé en ce que** ledit processeur de signal numérique (80) est adapté pour récupérer une information calculée.
